Europäisches Patentamt

European Patent Office

Office européen des brevets

(19)

(11) **EP 0 833 177 A1**

(12) **EUROPEAN PATENT APPLICATION**

(43) Date of publication:
**01.04.1998 Bulletin 1998/14**

(51) Int Cl.6: **G02B 6/44**

(21) Application number: **97306276.3**

(22) Date of filing: **19.08.1997**

(84) Designated Contracting States:
**AT BE CH DE DK ES FI FR GB GR IE IT LI LU MC NL PT SE**

(30) Priority: **30.08.1996 US 708011**

(71) Applicant: **LUCENT TECHNOLOGIES INC.**
**Murray Hill, New Jersey 07974-0636 (US)**

(72) Inventor: **Wilson, Carla Green**
**Lithonia, Georgia 30058 (US)**

(74) Representative: **Johnston, Kenneth Graham et al**
**Lucent Technologies (UK) Ltd,**
**5 Mornington Road**
**Woodford Green Essex, IG8 OTU (GB)**

(54) **High-fiber count optical fiber cable with enhanced flexibility**

(57)     This invention relates to a high-fiber count optical fiber cable (10) with enhanced flexibility. In general, the present invention describes an optical fiber distribution cable design wherein to enhance overall flexibility of the cable (10), the materials surrounding the various components and sections of the cable are configured so that the materials with a lower modulus are positioned closer to the outer periphery of the cable than the materials with a higher modulus.

More specifically, the preferred embodiment of the present invention is an optical fiber cable design comprising a high number of optical fibers (14), generally more than twelve, wherein the fibers are arranged in a number of separate break-out or fan-out cable cores (12-12) so as to establish an optical fiber distribution cable (10). According to the distribution cable design of the present invention, each of the cable cores (12-12) are enclosed by a plastic jacket, while a separate outer plastic jacket surrounds the collection of cable cores. Additionally, each individual fiber may be protected by a plastic buffering material. The present invention teaches that the overall flexibility of the resulting cable can be significantly enhanced by purposely having the secant modulus of the plastic materials positioned near the outermost part of the cable to be higher than the secant modulus of the materials positioned nearer the center of the cable.

FIG. 1

## Description

## Technical Field

This invention relates to a high-fiber count optical fiber cable with enhanced flexibility.

## Background of the Invention

In the construction of many buildings, a finished ceiling, which is referred to as a drop ceiling, is placed below a structural floor panel that is constructed of concrete, for example. The drop ceiling often supports light fixtures and other ceiling-mounted items, while the space between the ceiling and the structural floor from which it is suspended serves as a return-air-plenum for elements of heating and cooling systems. These spaces between the ceiling and the structural floor are called plenums and usually extend throughout the length and width of each floor of the building. In addition to the uses listed above, the plenum area is a convenient location for the installation of cables for communication and/or data transmission, to support applications such as videophones, facsimile machines, televisions, computers, alarm systems, etc.

when a fire occurs in a room area between a floor and a drop ceiling thereabove, it may be contained by walls and other building elements which enclose that room area. However, when and if the fire reaches the plenum, and if flammable material occupies the plenum, the fire can spread quickly through entire stories of the building, with smoke propagating through the plenum to adjacent areas. Additionally, a wick-effect often causes the fire to spread by traveling along the length of the various cables which are installed in the plenum. In other words, plenums provide an easy pathway for the spread of fire and smoke which directly endangers human life and can also damage or destroy the wiring for emergency signaling equipment.

Because of the possibility of such flame spread and smoke evolution, particularly when aided by flammable insulation of cables, the 1975 edition of the National Electric Code (NEC) essentially prohibited the use of existing communication cables in plenums unless they were enclosed in metal conduits. However, the code does permit at least one exception to the practically cost prohibitive requirement of metal conduits. For example, fire-retardant, smoke-suppressed cables are permitted without metallic conduit, provided that such cables are tested and approved by an authority such as Underwriters Laboratories. More particularly, the specifications of the National Electrical Code (NEC) Article 770-6 state that cables can either be installed in fire proof metal conduits or meet the requirements of the UL-910 Fire and Smoke Test.

Because of the aforementioned dangers, there exist relatively significant constraints on the design and manufacture of premise cables (cables installed within buildings). As commonly used throughout the industry, "plenum cables" are cables designed for installation without metal conduit. Since plenum cables do not require the expensive and cumbersome metallic conduit, they are less expensive to rearrange, relocate, or add to an existing installation when the needs of the customer change than cables that satisfy the specifications of the NEC Article 770-6 by including a metal conduit.

In the past, certain electrical communication cables have comprised a core having a paper core wrap enclosed in a relatively thick metallic shield, but such cables are relatively inflexible and somewhat difficult to maneuver in plenums. Moreover, care must be taken during installation to guard against possible electrical shock, which may be caused by the metallic sheath of the above-described cables engaging exposed electrical service wires or equipment in a plenum. Also, while the above-described cables meet the flame-spread requirements of the code, the snugness with which the metallic shield encloses the conductors prevents charring of the conductor insulation that could effectively seal off a portion of the cable about the flame and reduce smoke evolution. Thermoplastic fluoropolymers have been accepted as the jacketing and insulation materials for plenum cables without the use of metal conduit, but such materials are relatively expensive and difficult to process. Fire-retardant poly (vinyl chloride) (PVC) compositions are currently evolving as plenum grade materials.

As the technology has developed, many of the communications cables which used metallic conductors as the transmission media have been replaced by cables containing optical fibers. While there are significant differences in the insulation requirements of a metallic electrical cable and an optical fiber cable, the requirements regarding flame spread and smoke evolution are essentially identical.

Additionally, as customer needs for capacity and data-rate service increase, so does the need for enhanced transmission capabilities, such as through higher fiber count-cables. Since plenum cables are a less expensive option than cable designs containing metallic conduits, the demand for high-fiber count plenum cable has been increasing and will continue to grow. While various commercial offerings exist for plenum cables with 1 to 12 fibers, customers are requesting cables with 24, 36, 48 and 72 fibers. The issue is further complicated by the mechanical, optical, and customer performance requirements.

With this increase in the size of cables needed by the industry, the amount/volume of insulating materials incorporated into a cable also significantly increase. This is important since an inherent problem with most, if not all, of the materials suitable for use in a plenum qualified cable is that they are unacceptably stiff when used in cable designs of greater than about 12 fibers. Furthermore, since flexibility is a critical requirement for the physical properties of a cable, the industry needs a cable design that not only fully qualifies as a plenum rated cable even when containing a high number of fibers, i.e. 12 or more fibers, but which also exhibits the needed flexibility for the variety of environments into which such cables are now being employed.

## Summary of the Invention

This invention relates to a high-fiber count optical fiber cable with enhanced flexibility as set forth in the claims

## Brief Description of the Drawings

FIG. 1 is an end cross-sectional view of one embodiment of a communications cable in accordance with the present invention and which has up to 24 or 36 fibers therein;

FIG. 2 is an end cross-sectional view of one embodiment of a communications cable in accordance with the present invention and which has up to 48 fibers therein;

FIGS. 3A and 3B are end cross-sectional views of two embodiments of a communications cable in accordance with the present invention and which has up to 72 fibers therein; and

FIG. 4 is an end cross-sectional view of an alternative embodiment of a communications cable in accordance with the present invention and which has up to 72 fibers therein.

## Detailed Description of the Preferred Embodiment

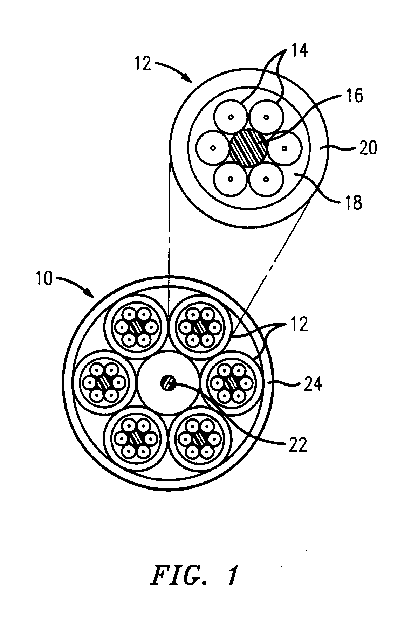

Figure 1 depicts one communications cable construction suitable for implementing the novel aspects of the present invention. As illustrated, according to a preferred embodiment of the present invention, an optical fiber cable, generally depicted as element 10, is a high-fiber count distribution cable that includes within it at least one, and preferably more than one, component or breakout cable portion(s) 12-12. The design intent of such distribution cables is to allow a single cable to carry a large number of optical fibers, generally more than twelve (12), to a location and then have the capability of separating out at least one component or breakout cable portions 12-12 therefrom with each containing some fibers to establish the end portion of a communication network. Typically, each component or breakout cable portion 12-12 includes six or twelve tight buffered singlemode or multimode optical fibers 14 which are jacketed together as a group. The distribution cable design is often referred to as a break-out or fan-out cable with the internal portions being referred to as either component cables, fiber units and/or break-out or fan-out cable cores.

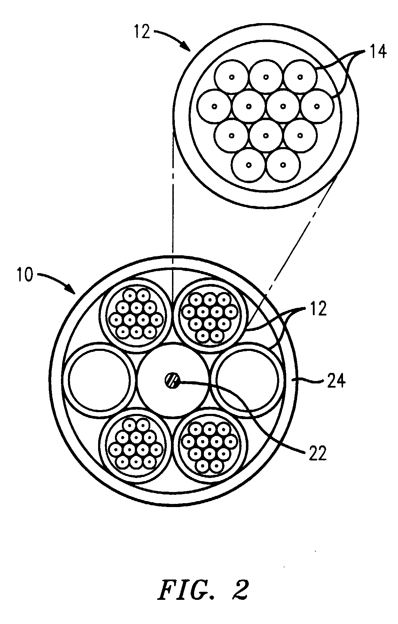

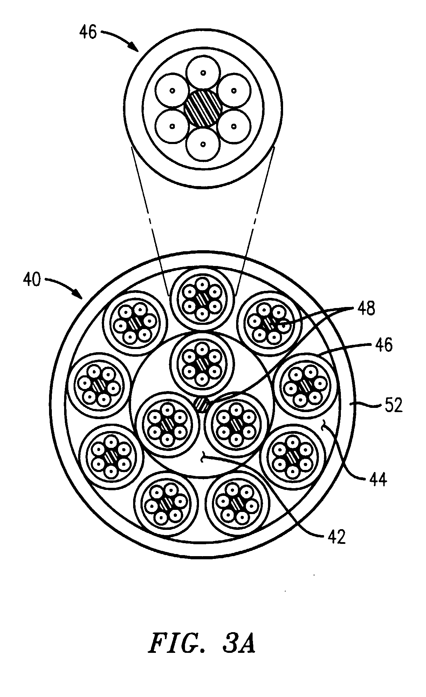

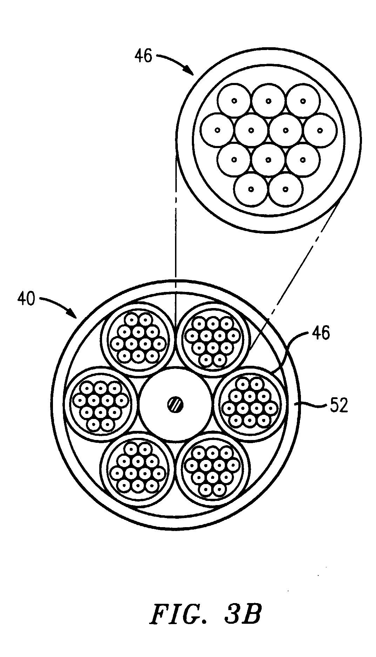

In general, multi-fiber cables are designed for a wide range of networking applications requiring a small and flexible construction. These cables are suitable for placement in ducts, riser shafts, conduits, plenums and computer room floors and are thus primarily used as backbone cables that allow an installer to provide the number of fibers needed on each floor or at each station and maintain adequate protection from the environment. Specific applications for these cables include computer links, jumper assemblies, and LAN backbones. In accordance with the distribution cables of the present invention, the six- and twelve-fiber component cables serve as the building block for high-fiber-count cables. Most often, the six-fiber component cable cores serve as the building block for up to 24- and 36-fiber cables while the 12-fiber component cable cores (not shown) serve as the building block for up to 48- and 72-fiber cable design. However, the six-fiber component cable cores may also be used as the building block for up to 48- and 72-fiber cable designs as illustrated in Figs. 2 and 3, respectively.

There are many design options for plenum cables. The material requirements for cable are also great in number when the mechanical, optical loss, and other customer requirements are considered. Material characteristics are an essential key to developing a plenum cable.

In one particular embodiment of a high-fiber count distribution cable, shown in Figs. 1-3, each of the component or breakout cable portion(s) 12-12 includes six optical fibers 14 that are stranded around a 0.039-in. (1.0 mm) diameter Fiber Reinforced Plastic (FRP) rod 16 followed by a layer of aramid yarn 18. Additionally, a colored plastic tape 20 may be wrapped over the group of optical fibers to facilitate identification of each of the fiber units. As shown in this specific cable design, up to eight of these fiber units or component cables 12-12 may be stranded around a central organizer 22. One acceptable element for the central organizer 22 is a Fiber Reinforced Plastic (FRP) rod jacketed with poly (vinyl chloride) (PVC). For cable designs of less than 48 fibers, solid PVC filler rods may be used in place of the fiber units 12-12 to appropriately fill or complete the cable structure. Lastly, another plastic tape 24 may be wrapped over the collection of fiber units 12-12.

One structural design for a high fiber count communications cable, generally depicted as element 40, with up to 72 optical fibers, is depicted in Figures 3A and 3B. As shown, such a construction consists of two layers 42 and 44 of fiber units 46. The first layer 44 has three fiber units 4646 or component cable stranded around a 0.039-in (1.0 mm) diameter FRP rod 48 followed by a layer of aramid yarn 50. If desired, a plastic tape 52, as described earlier, may be wrapped over this inner core layer 42. A second layer 44 of fiber units 46-46 is stranded around the first layer of three fiber units. Lastly, as noted earlier, solid PVC filler rods may be used in place of fiber units for cables of a total fiber count of less than 72 as appropriate to fill the overall cable structure.

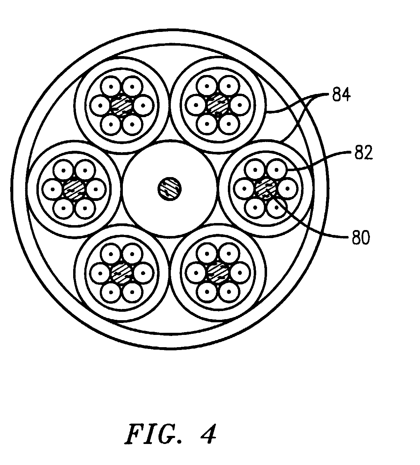

It should be noted that the particular strength requirements for the component or breakout cable(s) 12-12 and 46-46 may vary significantly depending on the specific application and/or environment these component cables are used in after separation from the main distribution cable 10 and 40. In this regard, a second embodiment illustrating a different strength system is set forth in Figure 4.

The cable design of Figure 4 utilizes a different form of strength system than the design discussed immediately above. Specifically, the alternative design as shown in Figure 4 includes an elongated central aramid yarn member 80 that is surrounded and contacted by a plurality of buffered optical fibers 82-82, preferably six (6) in number. The elongated central aramid yarn member 80 acts as an organizer to assist in the positioning of the optical fibers 82-82 while also providing the necessary strength requirements for the component or breakout cable(s) 84-84. A more detailed description of this overall cable design is available in copending and commonly-assigned U.S. patent application Serial Number 08/580,229 filed December 28, 1995, which is expressly incorporated by reference herein.

In addition to the structure discussed above, the component or breakout cable cores of high-fiber count (HFC) distribution cables are each constructed with a plastic jacket around the group of optical fibers. To complete the overall communication cable construction, a plastic jacket is also positioned around the entire collection of component or breakout cable cores as an outer jacket. One example of such an outer plastic jacket is about 0.043-in (1.1 mm) thick flame retardant PVC layer illustrated in Figure 4.

As presently available in the industry, the particular materials used for the internal jackets around each of the component or breakout cable cores and for the outer jacket of the distribution cable have been selected by a large number of different factors. Unfortunately, the various factors considered when selecting the combination of materials are most frequently not evaluated as a collective whole but instead viewed with only an isolated look at the particular component part of the distribution cable being covered. Such design techniques have led to a collection of material choices that, while individually each may satisfy a particular niche concern of one part of the cable design, actually has an adverse effect on at least one of the overall performance criteria of the resulting distribution cable. Specifically, the high-fiber count cable designs of the prior art have generally been woefully inflexible for the increasingly-stringent flexibility demands of the industry.

In this regard, the present invention sets forth a cable design which optimizes the overall flexibility of the ultimate distribution cable manufactured without sacrificing any of the operational and/or performance obligations of such cables. In general, the present invention teaches that certain characteristics of the materials should be used and/or considered to establish the optimum position for such materials within the overall cable design. More specifically, the present invention describes and teaches that the flexibility of a distribution cable can be significantly enhanced by aligning the plastic materials used as various jacketing and/or buffering layers throughout the cable based on the modulus values of the materials being used. In particular, in accordance with the present invention, the higher modulus materials are purposely positioned toward the center of the cable structure while the materials with lower modulus values are used further out toward the periphery of the cable.

In other words, to ensure optimum cable flexibility, the material selected for the plastic jacket of the fiber units or component cable cores should have a higher modulus than the materials selected for use as the plastic outer jacket. Additionally, if desired, the buffer material could also be selected based on similar considerations by purposely using a material for the buffer of each of the fibers that has a modulus greater than the modulus of the jacket of the internal fiber units or component cables which as stated earlier, would have modulus greater than the modulus of the material used for the outermost jacket of the cable.

At present, there are numerous methods that are currently used to design and optimize plenum cables. Methods that are used to design plenum cables include; trial and error, use of screening devices or small scale burn test, and modeling through empirical testing. The most common process used in industry is the trial and error method. This methods consist of manufacturing a cable or several cables in long lengths, usually several thousand feet, and testing each of them. Trial and error methods are time consuming, inefficient and expensive.

To address and attempt to overcome these issues, some small scale burn tests were developed. Such tests included the miniature tunnel or the Mini-Tunnel, which was developed by an engineer at Siecor Corporation, the Radiant Heat Chamber (RHC) which was developed by an engineer at AT&T Bell Laboratories, and the cone calorimeter system. The cone calorimeter test is used to evaluate the combustion properties of materials. The test provides a means of measuring the response of materials exposed to controlled levels of radiant heating with or without an external ignitor. Unfortunately, none of these techniques have proven to be particularly accurate in predicting the results of the burn tests.

There are many different types of jacketing materials, depending on the environment the cable will be exposed to and its intended application. The sheath design of any fiber optic cable must isolate the fibers from mechanical forces exerted on the cable. The choice of materials used is not only predicated on mechanical design considerations, but must be carefully chosen to minimize the added loss due to cable manufacture and environmental conditions . In the outside plant arena, polyethylene (PE) is most often the material of choice. For premises applications the material of choice is typically poly (vinyl chloride) (PVC). Materials that are used in plenum applications include polyvinylidene fluoride (PVDF), perfluorethylene propylene (FEP) and low smoke PVC (LS PVC). For halogen free applications (European markets), flame retarded ethylene vinylacetate (EVA) based materials are typically selected for jackets. These materials are the preferred choice when both flame and freedom from halogens are required. In these cases, PE, PVC and plastics with fluorine generally are not acceptable material choices . Buffer materials are usually similar compounds, depending on the application. Outside plant cables typically do not have buffered fibers in the core, although there are a few exceptions.

Regardless of what methods have been used to assist in the design of a high-fiber count distribution cable, the specific materials used for the various jacketing layers has turned out to not vary too significantly from one cable design to another. From this standpoint, the material selected for the jacket of each of the component cables or fiber units is typically Low Smoke PVC. Importantly such materials most often have a modulus in the range of about 15-30 Kpsi. Secondly, PVDF are the materials are commonly used as the outermost jacket and typically have a modulus in the range of about 55-140 Kpsi. Lastly, the buffer material is typically Low Smoke PVC which has a modulus in the range of about 15-30 Kpsi. It is noted that all modulus values set forth herein are Secant Modulus.

As can be seen from the modulus values given immediately above, existing constructions for distribution cables are often totally contrary to the guidelines set forth in accordance with the present invention. Most notably, the existing designs use materials with the higher modulus values as the jacketing for components toward the outer periphery of the cable and materials with the lower modulus values as the jacketing for components toward the center of the cable. As discussed above, and with further explanation below, the present invention teaches that such cable designs exhibit unexceptable rigidity.

Contrary to the practices of the prior art and as stated above, the present invention teaches that the flexibility of the resulting cable can be significantly enhanced by purposely positioning higher modulus materials toward the center of the cable. Additionally, the rearranging of such materials in accordance with the present invention can be accomplished without adversely effecting or compromising on any of the criteria needed to fully satisfy the burn tests and therefore qualify the resulting distribution cable as a high-fiber count plenum-rated communications cable.

As support of the design approach set forth in accordance with the present invention, one is reminded that in general, Flexural Rigidity is equal to the product of the modulus (E) and the inertia (I) of a given body. In other words, the following formula applies:

$$\text{Flexural Rigidity} = (E) (I)$$

Additionally, for a body which is essentially circular, the equation for calculating the inertia (I) is

$$I = \frac{\pi D^4}{64} + A d^2$$

wherein, D is the diameter of the particular unit, $d$ is the distance from the center of the body to the particular unit for which the flexural rigidity contribution is being calculated and $A$ is the area of the particular unit.

Therefore, combining these two equations produces the following formula for the flexural rigidity of a composite body of essentially circular components:

$$\text{Flexural Rigidity} = (E) \left(\frac{\pi D^4}{64} + A d^2\right)$$

Since the communication cable designs of the present invention are essentially a collection of circular components, the equation set forth above provides insight into the specific properties and/or factors of any given component of a cable that determine the actual contribution to the overall flexural rigidity of the cable resulting from that particular component of the cable. Therefore, it follows that by calculating the individual contributions of the various components within a cable and then adding them together, one can readily quantify the overall flexural rigidity of the cable.

The formula immediately above clearly shows that a critical aspect in determining to what extent the modulus of a material ultimately affects the body's flexibility is the diameter (D) of the particular unit and the distance (d) that such material is located from the center of the body (i.e. neutral axis of the cable). In other words, due to the exponential relationship of the diameter and distance variables (D and d), even the slightest increase in 1) the diameter of the unit, or overall cable, or 2) the distance a given material is from the neutral axis of the cable causes a significant increase in the stiffness of the cable. This aspect is true regardless of the exact value of the modulus of that particular material.

Another way of viewing the crux of the present invention is to note that if the thickness of any material layer within a cable design is held constant but the modulus is increased, then the overall cable becomes stiffer. Furthermore, even if the modulus and thickness of a material within a certain component of the cable are maintained constant, the overall flexibility of the cable is significantly compromised as that particular component within the cable is moved further away from the neutral axis of the cable. Lastly, when all of the cable structural design characteristics, i.e. diameter and distance from the neutral axis, are maintained constant, the overall cable becomes more flexible if the modulus of the innermost components is higher than the modulus of the outer jacket.

Therefore, the present invention clearly establishes that in addition to the selection of certain materials for use within a cable based on their operational performance properties, it is also advantageous to pay particular attention to the specific location of theses materials within the cable based on their modulus.

As previously stated, the NEC requires that cables installed in plenum areas be either installed in ducts, conduit, or meet the requirements of the plenum test, which is the Underwriters Laboratory Plenum Burn Test, UL-910. The UL-910 test subjects the cable to the most stringent flame and smoke requirements in the cable industry. In fact, it is the only test with both flame spread and smoke requirements. In addition, it is important to note that these cables are not exempt from meeting the mechanical toughness, optical transmission performance and handlability requirements of the customer. Cables are designed to meet the plenum cable test using various materials and constructions.

During the UL 910 test, cable samples, of a length of approximately twenty-four and one-half feet (24 1/2 ft), are arrayed on a cable tray within a fire-test chamber, with a total width of the several parallel cable samples being approximately twelve inches. A 300,000 BTU/hour flame with a 240 feet per minute air flow within the chamber is applied to and engulfs the first four and one-half feet of the cable, and the flame is applied for twenty minutes. In order for the cable to pass the burn test and qualify as a plenum cable, the flame cannot spread beyond an additional five feet. The flame spread down the tunnel is observed through the small glass windows spaced one foot apart.

The exit end of the chamber is fitted to a rectangular-to-round transition piece and a straight horizontal length of vent pipe. A light source is mounted along the horizontal vent pipe at a point approximately sixteen feet from the vent end of the transition section and the light beam therefrom is directed upwardly and across the interior of the vent pipe. A photoelectric cell is mounted opposite the light source to define a light path length transversely through the vent pipe of approximately thirty-six inches, of which approximately sixteen inches are taken up by the smoke in the vent pipe. The output of the cell is directly proportional to the amount of light received from the light source, and provides a measure of light attenuation within the vent resulting from smoke, particulate matter, and other effluents. The output of the photoelectric cell is connected to a suitable recording device which provides a continuous record of smoke obscuration as expressed by a dimensionless parameter, optical density, given by the equation:

$$Optical\ Density = \log_{10} \frac{Ti}{T}$$

where $Ti$ is the initial light transmission through a smokeless vent pipe, and $T$ is the light transmission in the presence of smoke in the vent pipe. The maximum optical density permissible is 0.5, and the average optical density cannot exceed 0.15.

Plenum test are quite expensive, presently ranging from $800.00 to $1000.00 per test. As a result, cable designers are constantly looking for tools to aid in the design of plenum cables while reducing the cost.

**Claims**

1. An optical fiber communications cable, which comprises:

   more than twevle optical fibers;
   at least one internal plastic jacket surrounding a portion of the twevle or more optical fibers; and
   an outer plastic jacket collectively surrounding each the of internal jackets, wherein said cable is further characterized in that the modulus of the material used as the internal jacket is higher than or equal to the modulus of the material used for the outer jacket.

2. The optical fiber communications cable of claim 1 wherein said cable is further characterized in that the modulus of the material used as the internal jacket is higher than the modulus of the material used for the outer jacket.

3. The optical fiber communications cable of claim 1 further comprising a plastic buffering material which encloses each said optical fiber.

4. The optical fiber communications cable of claim 3, wherein the modulus of the buffering material is higher than or equal to the modulus of the material used for the internal jacket.

5. The optical fiber communications cable of claim 3, wherein the modulus of the buffering material is higher than the modulus of the material used for the internal jacket.

6. The optical fiber communications cable of claim 3 wherein said cable is further characterized in that the modulus of the material used as the internal jacket is higher than the modulus of the material used for the outer jacket, but lower than the modulus of the material used for the plastic buffering surrounding each fiber.

7. The optical fiber communications cable of claim 1, wherein the material for each of the at least one internal jacket has a modulus in the range of about 15-30 Kpsi at 23 °C (Secant Modulus).

8. The optical fiber communications cable of claim 1, wherein the material for said outer jacket has a modulus in the range of about 55-140 Kpsi at 23 °C (Secant Modulus).

9. The optical fiber communications cable of claim 3, wherein the material for said plastic buffering has a modulus in the range of about 15-30 Kpsi at 23 °C (Secant Modulus).

10. The optical fiber communications cable of claim 1, wherein each internal jacket establishes a break-out unit capable of operating as an independent communication cable when fully removed from the outer jacket.

FIG. 1

FIG. 2

**FIG. 3A**

FIG. 3B

EP 0 833 177 A1

FIG. 4

12

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>A | US 5 457 762 A (LOCHKOVIC GREG A ET AL)<br><br>* claim 8; figure 6 * | 1,2,7<br>8,9 | G02B6/44 |
| X | FR 2 722 029 A (ALCATEL CABLE)<br>* page 4, line 8 - page 5, line 27; figure 2 * | 1,2 | |
| X | EP 0 382 144 A (SUMITOMO ELECTRIC INDUSTRIES)<br>* page 5, line 34 - line 58; figure 5 * | 1,2 | |
| X | US 4 659 174 A (DITSCHEID HANS L ET AL)<br>* column 2, line 46 - line 61 *<br>* column 5, line 13 - line 17; figures 3,4 * | 1,2 | |
| A | US 5 039 195 A (JENKINS ARTIS C ET AL)<br>* column 4, line 23 - line 29; figure 1 *<br>* column 5, line 34 - line 45 *<br>* column 6, line 12 - line 24 * | 1,2,10 | |
| A | US 5 268 983 A (TATARKA DANIEL ET AL)<br>* column 3, line 16 - line 28 *<br>* column 4, line 10 - line 14; figure 2 * | 1,10 | TECHNICAL FIELDS SEARCHED (Int.Cl.6)<br><br>G02B |
| A | US 4 105 284 A (OLSHANSKY ROBERT)<br>* claims 1,3 * | 3-5 | |

The present search report has been drawn up for all claims

| Place of search | Date of completion of the search | Examiner |
|---|---|---|
| BERLIN | 9 December 1997 | Ciarrocca, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    & : member of the same patent family, corresponding
       document

EPO FORM 1503 03.82 (P04C01)